# EUROPEAN PATENT SPECIFICATION

(11) **EP 3 141 162 B1**
(45) Date of publication and mention of the grant of the patent: **11.05.2022**
(21) Application number: 16187047.2
(22) Date of filing: 02.09.2016
(51) Int. Cl.: A47J 27/21

(54) **KETTLE AND CONTROLLER THEREFOR**
KESSEL UND STEUERUNG DAFÜR
BOUILLOIRE ET RELATIF CONTRÔLE

(30) Priority: 02.09.2015 GB 201515559
(43) Date of publication of application: 15.03.2017
(73) Proprietor: Smarter Applications Limited, London N1 7SR (GB)
(72) Inventor: Lane, Andreas, London N1 7SR (GB); Lane, Christian, London N1 7SR (GB)
(74) Representative: Slingsby Partners LLP

(56) References cited:
- DE-A1-102009 045 521
- DE-U1-202010 002 020
- GB-A- 2 176 306
- GB-A- 2 181 273
- GB-A- 2 425 037
- GB-A- 2 508 198
- GB-A- 2 521 335
- US-A1- 2011 265 562

## Description

This invention relates to a kettle and mechanisms for controlling a kettle.

Kettles are a common tool used to heat liquid. They are typically used to boil water for beverage preparation or similar. Modern kettles are normally fitted with a mechanism which automatically turns the kettle off when the water has boiled. The kettle is normally turned on to boil the contents by manipulating a switch or button on the kettle.

GB 2521335 describes a kettle that can wirelessly transmit data relating to a number of states and which can wirelessly receive commands to carry out a number of functions. The kettle has a control unit configured to generate a refill reminder signal if the volume of fluid in the jug is assessed to have fallen below a minimum set level. This alerts a user that the kettle needs refilling and saves time the next time the kettle is to be used. The kettle may also have a weight sensor in the base unit, which indicates the weight of the jug and contents. The control unit may determine that the kettle needs refilling if the weight is below a certain preset minimum.

DE-A-102009045521 describes a water boiling device with an energy supply unit. A weighing device determines the weight of water provided in a water container. A supply voltage determining device can determine a supply voltage in the energy supply unit. The energy input needed to heat the water in the water container can be determined in dependence on the weight of the water.

There are also digital kettles for household use on the market. These kettles can be turned on remotely via any smartphone. Turning on the kettle remotely saves time by pre-boiling the water when the need for it arises. This can be done from any room in the house. Such kettles may have a traditional clear window allowing the user to check the water level. This means, however, that the water level can only be checked by the user when he or she is actually able to look at the kettle.

There is therefore a need for an improved mechanism for determining a water level in a kettle.

According to one aspect, there is provided a kettle according to independent claim 1.

The kettle may comprise a wireless transceiver that is capable of communicating wirelessly with a remote controller. The control unit may be configured to transmit an indication of the volume of liquid being held by the kettle to the remote controller. The control unit may be configured to trigger the kettle to start heating in dependence on an instruction received from the remote controller.

The kettle may comprise a user input device that is programmable via the remote controller. The control unit may be configured to interpret user input received via the user input device in dependence on an instruction received from the remote controller. The user input device may comprise a button and the control unit may be configured to interpret the pressing of that button as indicating that the liquid should be heated to a particular temperature. The control unit may be configured to change the temperature to which the liquid is heated on the button being pressed in dependence on an instruction received from the remote controller. The control unit may be configured to change the mode in which the liquid is heated on the button being pressed in dependence on an instruction received from the remote controller. The weight sensor may be located in a base of the kettle. The weight sensor may be offset from the centre of gravity of liquid that is held by the kettle. The kettle may comprise a plurality of feet located in its base for stabilising the kettle and the weight sensor may form one of those feet. The kettle may comprise feet that are not formed from weight sensors.

According to a second aspect, there is provided a controller 2. according to independent claim 8.

The controller may be configured to control the kettle to start heating at a predetermined time and to adjust that time in dependence on the indication. The controller may be configured to adjust the time at which the kettle starts heating in dependence on circumstantial data that is independent of the kettle. The controller may be configured to obtain the circumstantial data from a source other than the kettle.

The controller may be configured to receive, as an indication of a volume of liquid being held by the kettle, a weight output by a weight sensor in the kettle, the controller may be configured to convert said weight into an indication of the volume of liquid being held by the kettle.

The controller may comprise a user interface and may be configured to control the kettle in dependence on user input received via the user interface. The controller may comprise a display and may be configured to generate an image representing the volume of liquid that is being held by the kettle and display that image.

The controller may be physically separate from the kettle and comprise a wireless transceiver that is capable of communicating wirelessly with the kettle.

There may be provided a display device configured to receive an indication of a volume of liquid that is being held by a kettle and control its display to display a representation of that volume.

The display device may be configured to generate an image representing the volume and display that image.

There may be provided a kettle comprising a programmable user input device. The user interface device may be programmable via a remote controller.

According to a further aspect, there is provided a method according to independent claim 14.

According to a further aspect, there is provided machine readable code for implementing the claimed method.

There may be provided a kettle comprising a weight sensor that is located in the base of the kettle and which forms one of a plurality of feet for stabilising the kettle.

The weight sensor may be offset from the centre of gravity of liquid that is held by the kettle. The kettle may comprise feet that are not formed from weight sensors.

The present invention will now be described by way of example with reference to the accompanying drawings. In the drawings:
Figure 1 shows an example of a kettle;
Figure 2 shows an example of a kettle;
Figure 3 shows an example of a kettle base incorporating a weight sensor;
Figure 4 shows an example of a remotely controllable kettle and its associated controller;
Figure 5 shows an example of a method for displaying volume information;
Figure 6 shows an example of a method for triggering a kettle to start heating;
Figure 7 shows an example of a method for programming a user input device on a kettle; and
Figure 8 shows an example of an image representing a liquid volume.

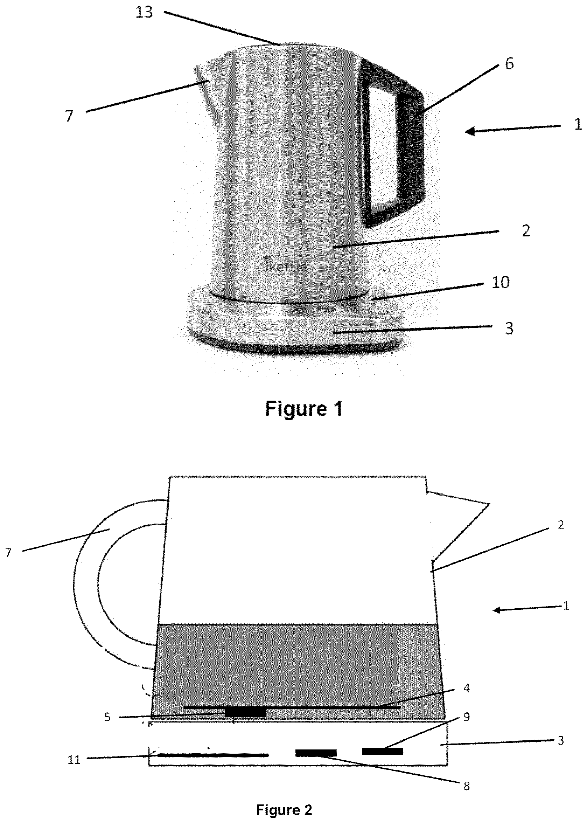

An example of a kettle will now be described with reference to Figures 1 and 2.

The kettle 1 has two main parts: a jug 2 and a base unit 3.

The jug 2 has a generally cylindrical body that holds liquid (usually water) in use and which can be filled via a spout 7 and/or a lid 13. A suitable capacity might be around 1.8 Litres. The jug 2 has an internal heating element 4 which heats and boils the contents of the jug 2. A suitable power output might be around 2200W. The jug 2 also has a temperature sensor 5 that monitors the temperature of the contents of the jug 2. The jug 2 can be lifted and manipulated by a handle 6 for pouring or similar. The base of the jug 2 includes an electrical connector that connects to the heating element 4. When the jug 2 is in position on the base unit 3, the heating element 4 is electrically connected via the electrical connector to a power supply module 8 located in the base unit 3 which provides electrical power to the heating element 4 and any other electrical items in the jug 2 (e.g. a power light or similar).

The base unit 3 is configured so that when the jug 2 is engaged with the base unit 3, the jug 2 rests on and is partly enclosed by the base unit 3 to make an electrical connection between the jug 2 and base 3. The base unit 3 is connected to a mains power outlet and receives electrical power via a cable or similar (not shown), typically 220V at 50HZ. The base unit 3 has an internal control unit 9 that includes a memory, a processor and any other necessary circuitry items. The internal control unit 9 preferably comprises a micro control unit that receives input from the temperature sensor 5, input from weight sensor 12 (described below), commands from a control panel 10 on the base unit 3, and optionally instructions from a remote controller 13 that are received via wireless transceiver 11.

In one example the control panel has only a single button, which is described in more detail below. In other examples the control panel 10 may have a number of buttons that allow a user to select various functions for heating the contents of the jug 2 at a single button press. Advantageously, these could be a range of push-buttons for selecting different temperatures for the preparation of different beverages at a single press -e.g. 100°C for black tea, 90°C for coffee, 80°C for green tea, 65°C for heating milk, etc. A manual input can also be achieved using a temp up/down rocker switch or button pair or similar to manually select a desired temperature. A display (not shown) could also be included to show the current contents temperature, the selected temperature, power and signal connections, etc. A keep warm function could also be included, activation of which would either continuously power the heating element 4 at a low level to maintain the temperature of the contents of the jug 2 at an intermediate level above ambient but below a boiling or use temperature. Alternatively, the heating element could be intermittently activated to achieve a similar effect. The internal control unit 9 receives input from the control panel 10 and controls the output power of the heating element 4 accordingly.

A wireless transceiver 11 is also housed within the base unit 3, and is connected to the control unit 9 to enable two-way communication therebetween. The transceiver 11 receives signals from the temperature sensor 5 via the control unit 9. These signals relate, for example, to the temperature of the contents of the kettle. The wireless transceiver 11 is configured so as to be able to transmit these to a remote control unit 15, which is described in detail below.

The wireless transceiver 11 is configured so as to be able to receive and transmit data via any suitable wireless communication protocol. Suitable examples include Wi-Fi, Bluetooth, RF-ID, LTE, Weightless, wireless 802.llb/g, WEP/WPA/WPA2 etc. It may also be configured to exchange data with a wide variety of devices and platforms, including tablets, PCs, smart-phones, iPhones, Android-enabled systems etc.

Although Figures 1 and 2 show a kettle with a base unit it should be understood that this is optional and the principles, components and functions described herein might equally be implemented in a standard jug kettle, with or without a base unit.

In one example the kettle is provided with means for determining a volume of water in the jug. The kettle may be provided with a weight sensor in its base. The load measured by the weight sensor will provide an indication of the volume of water being held by the kettle. The weight sensor suitably outputs a reading to control unit 9, which may process the weight data itself to obtain a volume indication and/or may transmit it to remote control unit 13, which is described in detail below.

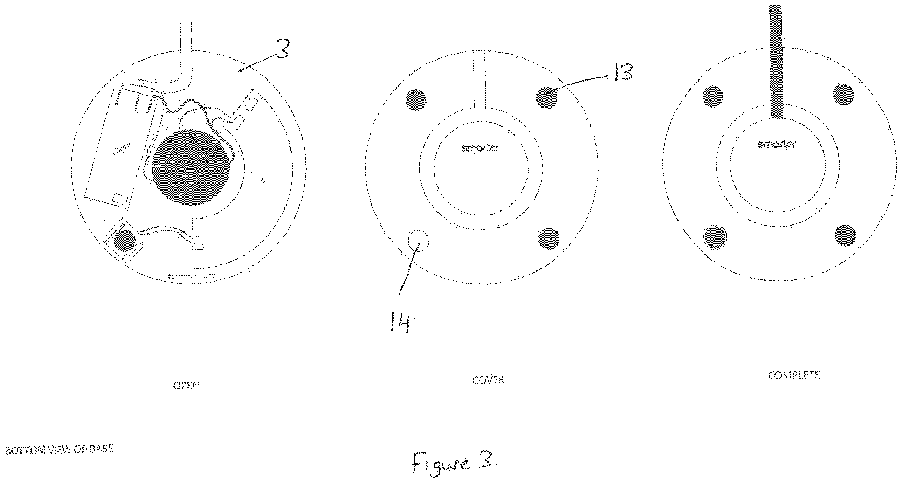

An example of one possible arrangement for the weight sensor is shown in Figure 3.

The base of the kettle 3 is shown as comprising a plurality of feet 13 for stabilising the kettle. The weight sensor 14 forms one of the feet.

A suitable weight sensor might be the type of load sensor that is often incorporated in kitchen scales. In digital kitchen scales the load sensor would usually be on all four feet of the product but it is preferred to use fewer sensors, to save costs. The arrangement in Figure 3 is therefore preferred as only one weight sensor is used.

One option for locating the weight sensor would be to place it directly below the centre of gravity of the liquid held by the kettle, i.e. in the centre of the base. This is not optimal in practice, however. The feet of the kettle are typically made of a material such as rubber that gives good grip and is non-slip for safety. Thus the feet are usually slightly deformable. The bottom surface of the weight sensor, on the other hand, should be rigid and inflexible, so that accurate weight readings are obtained. The combined effect of this is that a weight sensor placed in the centre of the base will often end up taking most of the weight of the kettle so that the kettle is largely balanced on the weight sensor rather than having its weight securely balanced across multiple, non-slip feet. It is therefore preferred for the weight sensor to be positioned offset from the centre of gravity of the liquid held by the kettle.

One consequence of having only part of the weight of the kettle transmitted through the weight sensor is that the sensor reading will not represent the weight of the whole kettle. The sensor reading is preferably multiplied up to take account of how the weight of the kettle is divided between the weight sensor and the other feet. It is also preferably adjusted to take account of non-uniform distribution of weight across the kettle as a whole (for example, where the handle of the kettle is located relative to the weight sensor). Finally the known weight of the kettle should be subtracted to obtain the weight of the liquid that the kettle is holding.

The liquid weight data may also be converted into a 'water level' by analysing the weight against the weights of typical units of water, e.g. 100g might equal 1 cup. The user may be able to calibrate this volume to unit calculation according to what size of cup they normally drink out of as this can vary according to user preference, type of beverage etc.

The control unit 9 could de-power the heating element if it calculates that the volume of liquid held by the kettle is below a certain preset minimum level.

In one implementation the kettle does not have a traditional clear window to check the water level. Instead the water level may be indicated by some form of display, probably on the base. In one example the control unit 9 may cause a single round light on the base station to be illuminated when the water level is low. The illumination may alter depending on how full the kettle is. For example, light colour, intensity, flashing frequency or area of illumination may all change depending on how full the kettle is. For example, a small panel could have three quarters of its area illuminated to show that the kettle is three quarters full.

The calculations described above could be performed by the control unit 9 in the base of the kettle but they could also be performed by a remote controller.

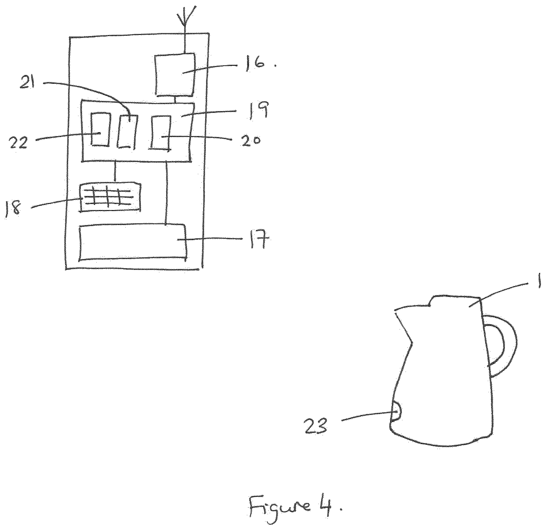

An example of a remotely controllable kettle is shown in Figure 4.

The remote controller 15 can be a smartphone, tablet device, desktop PC, laptop or similar. The remote controller 15 can be an existing commercial third-party unit programmed by loading it with software (e.g. a suitable app), or the remote control unit 15 could be a hardware unit specifically for use with the kettle 1.

The remote controller 15 is configured to be able to transmit and receive signals from the receiver/transmitter 11. The remote controller is suitably provided with a wireless transceiver 16 for this purpose. The wireless transceiver 11 is configured so as to be able to receive and transmit data via any suitable wireless communication protocol. Suitable examples include Wi-Fi, Bluetooth, RF-ID, LTE, Weightless, wireless 802.llb/g, WEP/WPA/WPA2 etc. It may also be configured to exchange data with a wide variety of devices and platforms, including tablets, PCs, smart-phones, iPhones, Android-enabled systems etc.

The remote controller is also configured to display information on a remote display 17 so that this can be viewed by a user.

The remote controller 15 also comprises a user interface 18 for receiving user input.

The remote controller 15 has an internal control unit 19 that includes a memory, a processor and any other necessary circuitry items. The internal control unit 19 preferably comprises a micro control unit configured to implement a conversion unit 20, command unit 21 and timing unit 22. The control unit is configured to receive input from the kettle via wireless transceiver 16 and commands from the user interface 18, and to send commands to the kettle via wireless transceiver 16.

The remote controller is preferably generally configured to receive and process data from the kettle 1, receive and process input from the user and transmit commands to the kettle. Those commands may include instructions to activate the heating element in order to start heating the liquid contained in the kettle, to heat the liquid to a particular temperature, to operate in a particular mode when heating the liquid etc. Instructions such as these are transmitted by remote controller 15 via wireless transceiver 16 to control unit 9, which receives them via wireless transceiver 11 and then acts on them.

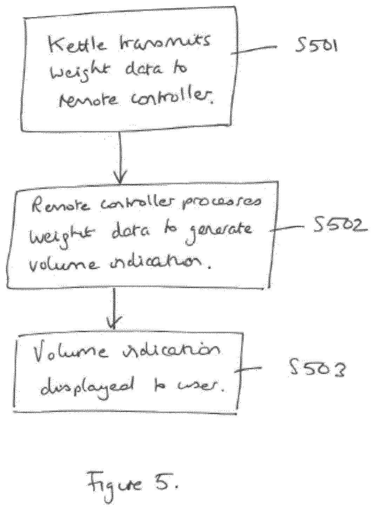

Examples of some more detailed routines are outlined below with reference to Figures 5 to 7.

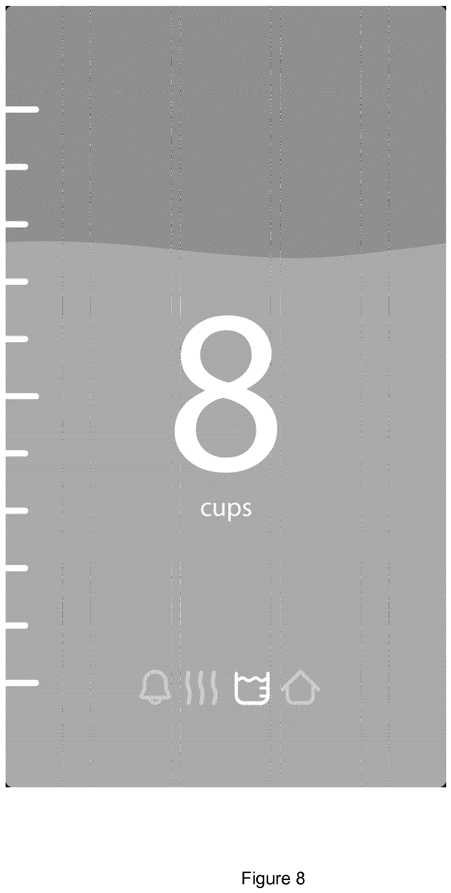

First, the remote controller can be used to display a volume indication to a user. With reference to Figure 5, control unit 9 in the kettle 1 is suitably configured to transmit an indication of the volume of liquid being held by the kettle to the remote controller 15 via transceiver 11 (step 501). In some examples this may be a raw measurement output by the weight sensor 14. The conversion unit 20 in the controller's control unit 19 converts this weight into a volume being held by the kettle (step 502). This volume is then displayed to the user on the remote controller's display 17 (step 503). The remote controller may display this volume simply as a number, e.g. a number of cups, or it may generate an image representing the volume, such as that shown in Figure 8.

The method described above and in Figure 5 addresses the problem of the user not knowing how much water is in the kettle when they are not able to see it. With this embodiment the user is able to determine water volume remotely. It is thought that some users will also find this reassuring, as it has been found that some do not trust the automatic cut-off if the water level is below a predetermined level in the kettle and prefer to be able to verify for themselves that the kettle contains enough water before they instruct it to boil.

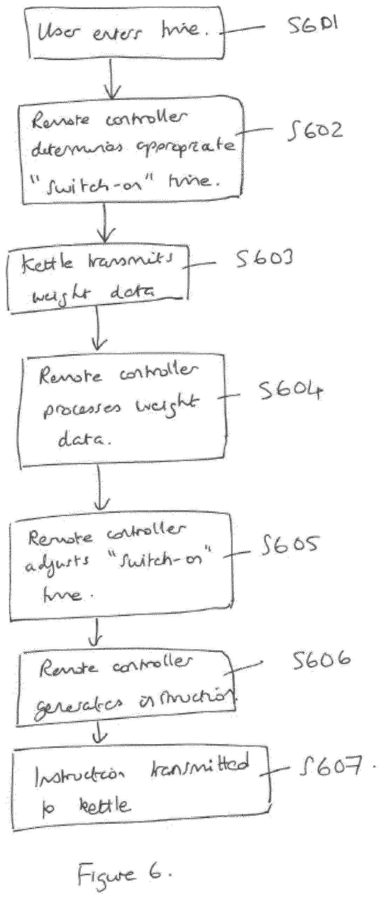

Second, the remote controller can be used to set in advance a time at which the kettle should switch on, and that time can then be adjusted in dependence on how much liquid is in the kettle. With reference to Figure 6, the remote controller 15 receives a "wake-up" time from the user via user interface 18 (step 601). This might be a time that the user wants the kettle to switch on, a time that the user wants the liquid in the kettle to have reached a particular temperature by or a time that is actually associated with another activity (e.g. an alarm call) that control unit 19 can use to determine the switch on time for the kettle (step 602). Control unit 9 in the kettle 1 transmits an indication of the volume of liquid being held by the kettle to the remote controller 15 via transceiver 11, as before (step 603). In some examples this may be a raw measurement output by the weight sensor 14. The conversion unit 20 in the controller's control unit 19 converts this weight into a volume being held by the kettle (step 604). The remote controller's timing unit 22 then adjusts the time at which the kettle should switch on in dependence on the volume of water that the kettle is holding (step 605). The command unit 21 generates the appropriate instruction, which is transmitted to the kettle via wireless transceiver 16. The control unit 9 then triggers the kettle to start heating in compliance with the instruction received from the remote controller (step 606).

The method described in above and shown in Figure 6 can advantageously be used, for example, to check how much water is in the kettle 10 minutes before a user's morning alarm sounds, automatically make an adjustment to the expected heating time so that the kettle is automatically triggered before the alarm goes off. So if the kettle holds 100g of water, which may be equal to one cup, the kettle might be triggered to start heating three minutes before the user's alarm goes off. If kettle was full of water, it might start boiling 6 minutes before the alarm is due to sound

The remote controller may also be configured to adjust the time at which the kettle starts heating in dependence on circumstantial data. This is data that is independent of the kettle but which might nonetheless be relevant to when the user might want the kettle to start heating. The remote controller may obtain this circumstantial data from a source other than the kettle, for example, web services or other applications that are running on the remote controller. Examples may include weather reports, traffic reports or entries in the user's calendar.

Third, the remote controller may be used to program a user input device on the kettle. In a preferred example, the user input device may be as simple as a single button 23. The term "button" is here used generally to encompass any user input means capable of providing an on/off instruction, including any mechanical button or switch, touch sensitive screen, infra-red detector etc.

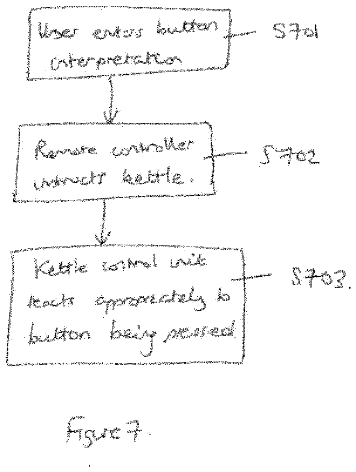

With reference to Figure 7, the remote controller 15 receives user input via user interface 18 that indicates how the user wants the kettle to respond to button 23 being pressed (step 701).This instruction may define, for example, a particular temperature that control unit 9 should cause the water to be heated to or a heating mode that it should employ. The command unit 21 generates the appropriate instruction, which is transmitted to the kettle via wireless transceiver 16 (step 702). The control unit 9 then interprets via button 23 in accordance with the instruction from the remote controller (step 703).

In one mode control unit 9 may be configured to just to control heating element 4 to heat the liquid to a particular temperature. In another mode, it may control the heating element 4 to heat the liquid above the desired temperature and then allow it to cool until the desired temperature is reached.

The remote controller enables users to set their default settings via the remote controller, e.g. via an app on the user's smartphone. One button is then all that is required to boil the kettle at any desired temperature simply by pre-programing it using the Kettle app. For example, if the user likes his water heated to 78°C (to avoid burning tea) then he can save this setting using his Kettle app on his smartphone and set it as a default temperature. Every time that the physical button is pressed on the kettle it will heat to the last saved temperature. It can also be used to set the kettle into different modes, such as the "boil first" feature. The button can be pre-programmed to cause the kettle to heat the water to just over 100°C, allows the water to cool and then alerts the user when the temperature comes down to the desired temperature.

The remote controller thus provides a convenient way of controlling the kettle but any of the functions described above with reference to the remote controller could equally be implemented by the control unit 9 in the kettle. In those implementations the remote controller could in effect be considered to be part of the kettle rather than remote from it.

The weight values determined herein might be advantageous for other purposes too. For example, weight values could, for example, be converted by the kettle into boiling times if the kettle were appropriately calibrated, potentially removing the need for a temperature sensor.

The functions described herein could also be applicable to and be implemented by other products, and not just kettles. For example, it will be readily understood that the functions described herein could be equally applicable to devices that are intended to cool liquids rather than heat them.

At least some of the structures shown in Figure 1 to 4 (and indeed any other block apparatus diagrams included herein) are intended to correspond to a number of functional blocks in an apparatus. This is for illustrative purposes only. The figures are not intended to define a strict division between different parts of hardware on a chip or between different programs, procedures or functions in software. In some embodiments, some or all of the algorithms described herein may be performed wholly or partly in hardware. In many implementations, the control units, command unit, conversion unit and timing unit will be implemented by a processor acting under software control. Any such software is preferably stored on a non-transient computer readable medium, such as a memory (RAM, cache, hard disk etc) or other storage means (USB stick, CD, FLASH, ROM, disk etc).

## Claims

1. A kettle comprising:
a weight sensor configured to determine an indication of a volume of liquid that is held by the kettle; and
a heating element for heating liquid held by the kettle;
**characterised in that** the kettle comprises:
a control unit configured to control the kettle to start heating the liquid at a time that is dependent on that indication;
wherein the control unit is configured to control the heating element in both a first mode, in which the control unit controls the heating element to heat the liquid to a particular temperature, and in a second mode, in which the control unit controls the heating element to heat the liquid above the particular temperature and then allows the liquid to cool until the liquid reaches the particular temperature.

2. A kettle as claimed in claim 1, wherein the kettle comprises a wireless transceiver that is capable of communicating wirelessly with a remote controller and the control unit is configured to transmit an indication of the volume of liquid being held by the kettle to the remote controller.

3. A kettle as claimed in claim 2, wherein the kettle comprises a user input device that is programmable via the remote controller, and the control unit is configured to interpret user input received via the user input device in dependence on an instruction received from the remote controller.

4. A kettle as claimed in claim 3, wherein the user input device comprises a button and the control unit is configured to interpret the pressing of that button as indicating that the liquid should be heated to a particular temperature.

5. A kettle as claimed in any preceding claim, wherein the weight sensor is located in a base of the kettle and is offset from the centre of gravity of liquid that is held by the kettle.

6. A kettle as claimed in any preceding claim, wherein the kettle comprises a plurality of feet located in its base for stabilising the kettle and the weight sensor forms one of those feet.

7. A kettle as claimed in claim 5 or claim 6, wherein the control unit is configured to determine the weight of liquid in the kettle in dependence on the indication from the weight sensor adjusted to take account of non-uniform distribution of weight across the kettle as a whole.

8. A controller configured to:
receive an indication of a volume of liquid that is being held by a kettle having a heating element;
**characterised in that** the controller is configured to:
control the kettle to start heating the liquid at a time that is dependent on that indication;
wherein the controller is configured to control the heating element in both a first mode, in which the controller controls the heating element to heat the liquid to a particular temperature, and in a second mode, in which the controller controls the heating element to heat the liquid above the particular temperature and then allows the liquid to cool until the liquid reaches the particular temperature.

9. A controller as claimed in claim 8, wherein the controller is configured to control the kettle to start heating at a predetermined time and to adjust that time in dependence on the indication.

10. A controller as claimed in claim 8 or 9, wherein the controller is configured to adjust the time at which the kettle starts heating in dependence on circumstantial data that is independent of the kettle.

11. A controller as claimed in claim 10, wherein the circumstantial data comprises one or more of weather report data, traffic report data and user calendar data.

12. A controller as claimed in any of claims 8 to 11, wherein the controller is configured to receive, as an indication of a volume of liquid being held by the kettle, a weight output by a weight sensor in the kettle, the controller being configured to convert said weight into an indication of the volume of liquid being held by the kettle.

13. A controller as claimed in any of claims 8 to 12, wherein the controller comprises a display and is configured to generate an image representing the volume of liquid that is being held by the kettle and display that image.

14. A method for controlling a kettle, comprising:
receiving an indication of a volume of liquid that is being held by a kettle;
**characterised in that** the method comprises:
controlling the kettle to start heating the liquid at a time that is dependent on that indication;
wherein controlling the kettle comprises selecting between a first mode, in which a heating element of the kettle is controlled to heat the liquid to a particular temperature, and a second mode, in which the heating element is controlled to heat the liquid above the particular temperature and then allows the liquid to cool until the liquid reaches the particular temperature, and controlling the kettle according to the selected first or second mode.

15. Machine readable code comprising instructions which, when it is executed by a machine, cause the machine to carry out the method as claimed in claim 14.

## Patentansprüche

1. Wasserkocher, umfassend:
einen Gewichtssensor, der koniguriert ist, um eine Angabe eines Flüssigkeitsvolumens zu bestimmen, das von dem Wasserkocher gehalten wird; und
ein Heizelement zum Erhitzen von Flüssigkeit, die von dem Wasserkocher gehalten wird;
**dadurch gekennzeichnet, dass** der Wasserkocher umfasst:
eine Steuereinheit, die konfiguriert ist, um den Wasserkocher so zu steuern, dass er mit dem Erhitzen der Flüssigkeit zu einem Zeitpunkt beginnt, der von dieser Angabe abhängt;
wobei die Steuereinheit dazu konfiguriert ist, das Heizelement sowohl in einem ersten Modus, in dem die Steuereinheit das Heizelement steuert, um die Flüssigkeit auf eine bestimmte Temperatur zu erhitzen, als auch in einem zweiten Modus, in dem die Steuereinheit das Heizelement steuert, um die Flüssigkeit über die bestimmte Temperatur zu erhitzen und dann die Flüssigkeit abkühlen zu lassen, bis die Flüssigkeit die bestimmte Temperatur erreicht.

2. Ein Wasserkocher nach Anspruch 1, wobei der Wasserkocher einen drahtlosen Transceiver umfasst, der in der Lage ist, drahtlos mit einer Fernbedienung zu kommunizieren, und
die Steuereinheit dazu konfiguriert ist, eine Angabe des Flüssigkeitsvolumens, das von dem Wasserkocher gehalten wird, an die Fernbedienung zu übertragen.

3. Ein Wasserkocher nach Anspruch 2, wobei der Wasserkocher eine Benutzereingabevorrichtung umfasst, die über die Fernbedienung programmierbar ist, und die Steuereinheit konfiguriert ist, um über die Benutzereingabevorrichtung empfangene Benutzereingaben in Abhängigkeit von einer vom Benutzer empfangenen Anweisung von der Fernbedienung zu interpretieren.

4. Ein Wasserkocher nach Anspruch 3, wobei die Benutzereingabevorrichtung einen Knopf umfasst und die Steuereinheit dazu konfiguriert ist, das Drücken dieses Knopfes so zu interpretieren, dass er anzeigt, dass die Flüssigkeit auf eine bestimmte Temperatur erhitzt werden sollte.

5. Ein Wasserkocher nach einem der vorhergehenden Ansprüche, wobei der Gewichtssensor sich in dem Sockel des Wasserkochers befindet und ist versetzt zum Schwerpunkt der Flüssigkeit, die von dem Wasserkocher gehalten wird.

6. Ein Wasserkocher nach einem der vorhergehenden Ansprüche, wobei der Wasserkocher eine Vielzahl von Füßen umfasst, die in seinem Sockel zum Stabilisieren des Wasserkochers angeordnet sind, und der Gewichtssensor einen dieser Füße bildet.

7. Ein Wasserkocher nach Anspruch 5 oder Anspruch 6, wobei die Steuereinheit dazu konfiguriert ist, das Gewicht der Flüssigkeit im Wasserkocher in Abhängigkeit von der Anzeige des Gewichtssensors zu bestimmen.

8. Eine Steuerung, die konfiguriert ist für:
einen Hinweis auf ein Flüssigkeitsvolumen zu erhalten, das von einem Wasserkocher mit einem Heizelement gehalten wird;
**dadurch gekennzeichnet, dass** die Steuerung konfiguriert ist, um:
den Wasserkocher so zu steuern, dass er mit dem Erhitzen der Flüssigkeit zu einem Zeitpunkt beginnt, der von dieser Anzeige abhängt;
wobei die Steuerung dazu konfiguriert ist, das Heizelement sowohl in einem ersten Modus zu steuern, in dem die Steuerung das Heizelement steuert, um die Flüssigkeit auf eine bestimmte Temperatur zu erhitzen, als auch in einem zweiten Modus, in dem die Steuerung das Heizelement steuert, um die Flüssigkeit über die bestimmte Temperatur zu erhitzen und
dann die Flüssigkeit abkühlen zu lassen bis die Flüssigkeit die bestimmte Temperatur erreicht.

9. Eine Steuerung nach Anspruch 8, wobei die Steuerung dazu konfiguriert ist, den Wasserkocher so zu steuern, dass er zu einer vorbestimmten Zeit mit dem Erhitzen beginnt und diese Zeit in Abhängigkeit von der Anzeige einstellt.

10. Eine Steuerung nach Anspruch 8 oder 9, wobei die Steuerung konfiguriert ist, um den Zeitpunkt, zu dem der Wasserkocher mit dem Erhitzen beginnt, in Abhängigkeit von von dem Wasserkocher unabhängigen Umstandsdaten einzustellen.

11. Eine Steuerung nach Anspruch 10, wobei die Umstandsdaten eines oder mehrere von Wetterberichtsdaten, Verkehrsberichtsdaten und Benutzerkalenderdaten umfassen.

12. Eine Steuerung nach einem der Ansprüche 8 bis 11, wobei die Steuerung so konfiguriert ist, dass sie als Angabe eines Flüssigkeitsvolumens, das von dem Wasserkocher gehalten wird, eine Gewichtsausgabe von einem Gewichtssensor in dem Wasserkocher empfängt, wobei die Steuerung konfiguriert, um das Gewicht in eine Angabe des Flüssigkeitsvolumens umzuwandeln, das von dem Wasserkocher gehalten wird.

13. Eine Steuerung nach einem der Ansprüche 8 bis 12, wobei der Anzeiger eine Anzeige umfasst und konfiguriert ist, um ein Bild zu erzeugen, das das Flüssigkeitsvolumen darstellt, das von dem Wasserkocher gehalten wird, und dieses Bild anzuzeigen.

14. Verfahren zum Steuern eines Wasserkochers, umfassend:
Empfangen einer Angabe eines Flüssigkeitsvolumens, das von einem Wasserkocher gehalten wird;
**dadurch gekennzeichnet, dass** das Verfahren umfasst:
Steuern des Wasserkochers, um mit dem Erhitzen der Flüssigkeit zu einem Zeitpunkt zu beginnen, der von dieser Anzeige abhängt;
wobei das Steuern des Wasserkochers das Auswählen zwischen einem ersten Modus umfasst, in dem ein Heizelement des Wasserkochers gesteuert wird, um die Flüssigkeit auf eine bestimmte Temperatur zu erhitzen, und einem zweiten Modus, in dem das Heizelement gesteuert wird, um die Flüssigkeit über die bestimmte Temperatur zu erhitzen und lässt dann die Flüssigkeit abkühlen, bis die Flüssigkeit die bestimmte Temperatur erreicht, und Steuern des Wasserkochers gemäß dem ausgewählten ersten oder zweiten Modus.

15. Maschinenlesbarer Code , der Anweisungen enthält die bei Ausführung durch eine Maschine bewirken, dass die Maschine das beanspruchte Verfahren ausführt wie in Verfahren 14.

## Revendications

1. Une bouilloire comprenant :
Un capteur de poids configuré pour déterminer une indication d'un volume de liquide qui est contenu dans la bouilloire ; et un élément chauffant pour chauffer le liquide contenu dans la bouilloire :
**Caractérisé en ce que** la bouilloire comprend :
Une unité de commande configurée pour commander la bouilloire pour commencer à chauffer le liquide à un moment qui dépend de cette indication ;
Dans lequel l'unité de commande est configurée pour commander l'élément chauffant à la fois dans un premier mode, dans lequel l'unité de commande l'élément chauffant pour chauffer le liquide à une température particulière, et dans un second mode, dans lequel l'unité de commande l'élément chauffant pour chauffer le liquide au-dessus de la température particulière et permet ensuite au liquide de refroidir jusqu'à ce que le liquide atteigne la température particulière.

2. Bouilloire selon la revendication 1, dans laquelle la bouilloire comprend un émetteur-récepteur sans fil qui est capable de communiquer sans fil avec un contrôleur à distance et l'unité de commande est configurée pour transmettre une indication du volume de liquide contenu dans la bouilloire au contrôleur à distance.

3. Bouilloire selon la revendication 2, dans laquelle la bouilloire comprend un dispositif d'entrée utilisateur qui est programmable via la télécommande, et l'unité de commande est configurée pour interpréter l'entrée utilisateur reçue via le dispositif d'entrée utilisateur en fonction d'une instruction reçue de la télécommande.

4. Bouilloire selon la revendication 3, dans laquelle le dispositif d'entrée de l'utilisateur comprend un bouton et l'unité de commande est configurée pour interpréter l'appui sur ce bouton comme indiquant que le liquide doit être chauffé à une température particulière.

5. Bouilloire selon l'une quelconque des revendications précédentes, dans laquelle le capteur de poids est situé dans une base de la bouilloire et est décalé du centre de gravité du liquide qui est maintenu par la bouilloire.

6. Bouilloire selon l'une quelconque des revendications précédentes, dans laquelle la bouilloire comprend une pluralité de pieds situés dans sa base pour stabiliser la bouilloire et le capteur de poids forme l'un de ces pieds.

7. Bouilloire selon la revendication 5 ou la revendication 6, dans laquelle l'unité de commande est configurée pour déterminer le poids du liquide dans la bouilloire en fonction de l'indication provenant du capteur de poids et de l'emplacement du capteur de poids par rapport au reste de la bouilloire.

8. Un contrôleur configuré pour :
Recevoir une indication d'un volume de liquide qui est maintenu par une bouilloire ayant un élément chauffant ;
**Caractérisé en ce que** le contrôleur est configuré pour :
Commander la bouilloire pour commencer à chauffer le liquide à un moment qui dépend de cette indication ;
Dans lequel le contrôleur est configuré pour commander l'élément chauffant à la fois dans un premier mode, dans lequel le contrôleur commande l'élément chauffant pour chauffer le liquide à une température particulière, et dans un second mode, dans lequel le contrôleur commande l'élément chauffant pour chauffer le liquide au-dessus de la température et permet ensuite au liquide de refroidir jusqu'à ce que le liquide atteigne la température particulière.

9. Contrôleur selon la revendication 8, dans lequel le contrôleur est configuré pour commander la bouilloire pour commencer à chauffer à un moment prédéterminé et pour ajuster ce moment en fonction de l'indication.

10. Contrôleur selon la revendication 8 ou 9, dans lequel le contrôleur est configuré pour ajuster l'heure à laquelle la bouilloire commence à chauffer en fonction de données circonstancielles qui sont indépendantes de la bouilloire.

11. Contrôleur selon la revendication 10, dans lequel les données circonstancielles comprennent une ou plusieurs des données de rapport météo, des données de rapport de trafic et des données de calendrier utilisateur.

12. Contrôleur selon l'une quelconque des revendications précédentes 8 à 11, dans lequel le contrôleur est configuré pour recevoir, en tant qu'indication d'un volume de liquide contenu dans la bouilloire, une sortie de poids par un capteur de poids dans la bouilloire, le contrôleur étant configuré pour convertir ledit poids en une indication du volume de liquide contenu dans la bouilloire.

13. Contrôleur selon l'une quelconque des revendications 8 à 12, dans lequel le contrôleur comprend un affichage et est configuré pour générer une image représentant le volume de liquide qui est maintenu par la bouilloire et afficher cette image.

14. Procédé pour contrôler une bouilloire, comprenant :
Recevoir une indication d'un volume de liquide qui est maintenu par une bouilloire ;
**Caractérisé en ce que** le procédé comprend :
Commander la bouilloire pour commencer à chauffer le liquide à un moment qui dépend de cette indication ;
dans lequel la commande de la bouilloire comprend la sélection entre un premier mode, dans lequel un élément chauffant de la bouilloire est commandé pour chauffer le liquide à une température particulière, et un second mode, dans lequel l'élément chauffant est commandé pour chauffer le liquide au-dessus de la température particulière et permet ensuite au liquide de refroidir jusqu'à ce que le liquide atteigne la température particulière et la commande de la bouilloire selon le premier ou le second mode sélectionné.

15. Code lisible par une machine pour mettre en œuvre le procédé selon la revendication 14.
